# FASCICULE DE BREVET EUROPEEN

(11) **EP 2 160 584 B1**
(45) Date de publication et mention de la délivrance du brevet: **23.11.2016**
(21) Numéro de dépôt: 08805560.3
(22) Date de dépôt: 06.05.2008
(51) Int. Cl.: G01M 1/24, G01M 1/04, F16F 15/22, F16F 15/32, F16F 15/315, F16C 15/00, B64C 27/12

(54) **OUTILLAGE DE FIXATION D'UN ARBRE DE TRANSMISSION ET BANC D'ÉQUILIBRAGE COMPORTANT UN TEL OUTILLAGE**
BEFESTIGUNGSMITTEL FÜR GETRIEBEWELLE UND AUSWUCHTBLOCK MIT DERARTIGEM MITTEL
TRANSMISSION SHAFT ATTACHMENT TOOLING AND BALANCING STAND COMPRISING SUCH TOOLING

(30) Priorité: 02.07.2007 FR 0704743
(43) Date de publication de la demande: 10.03.2010
(73) Titulaire: Airbus Helicopters, 13725 Marignane Cedex (FR)
(72) Inventeur: MISTRAL, Lucien, F-13220 Chateauneuf les Martigues (FR); HOLLIER LAROUSSE, Philippe, F-13320 Bouc bel Air (FR)
(74) Mandataire: Pouillot, Laurent Pierre Paul
(86) Numéro de dépôt international: PCT/FR2008/000656
(87) Numéro de publication internationale: WO 2009/004129

(56) Documents cités:
- GB-A- 2 356 030
- US-A- 5 022 276
- US-A1- 2003 022 720
- US-A1- 2005 005 686

## Description

La présente invention concerne un outillage de fixation d'un arbre de transmission ainsi qu'un banc d'équilibrage muni de cet outillage de fixation.

Plus particulièrement, l'invention se situe dans le domaine technique de l'équilibrage d'un arbre de transmission de puissance, notamment d'un giravion.

En effet, la plupart des giravions construits actuellement sont équipés d'au moins un turbomoteur à turbine libre. La puissance est alors prélevée sur un étage basse pression de la turbine libre, lequel étage est mécaniquement indépendant de l'ensemble du compresseur et de l'étage haute pression du turbomoteur. La turbine libre d'un turbomoteur tournant généralement entre 20 000 et 50 000 tours par minute, une boîte de réduction de la vitesse de rotation est nécessaire pour la liaison au rotor principal du giravion dont la vitesse de rotation est sensiblement comprise entre 200 et 400 tours par minute: il s'agit de la boîte de transmission principale.

Dans ces conditions, le turbomoteur est relié à la boite de transmission principale du giravion via au moins un arbre de transmission tournant autour de son axe de rotation à haut régime, c'est-à-dire à une vitesse supérieure à 5000 tours par minute.

De même, un giravion comporte en général un rotor arrière contrarotatif pour compenser le couple généré par le rotor principal et pour permettre le pilotage en lacet du giravion.

Par suite, au moins un arbre de transmission de puissance est en principe agencé entre la boite de transmission principale et une boite de transmission arrière de réduction de vitesse et de renvoi d'angle pour la prise de puissance du rotor arrière. Un tel arbre de transmission est aussi amené à tourner à une vitesse supérieure à 5000 tours par minute.

Afin que ces arbres de transmission ne génèrent pas de vibrations à l'ensemble du giravion lors de leur mouvement rotatif, il est impératif que ces arbres de transmission soient équilibrés de manière à ce que leur centre de gravité et leur axe central d'inertie soient agencés sur leur axe de rotation.

De façon générale, l'équilibrage statique et dynamique d'un corps mis en rotation consiste donc à positionner son centre de gravité et son axe central d'inertie sur son axe de rotation.

Dans ce contexte, pour minimiser les coûts de production et les risques de rupture en vol, chaque arbre de transmission est ainsi disposé sur un banc d'équilibrage, avant d'être installé dans le giravion, pour qu'un opérateur puisse l'équilibrer. Si l'opérateur constate que le centre de gravité et l'axe central d'inertie de l'arbre de transmission ne se trouvent pas sur l'axe de rotation de l'arbre de transmission, alors il enlèvera ou ajoutera de la matière dans des zones prévues à cet effet de l'arbre de transmission pour l'équilibrer et remédier au défaut constaté.

On connaît un premier banc d'équilibrage qui comporte un premier et un deuxième outillages de fixation mis en rotation par un générateur de mouvement usuel, un moteur électrique par exemple.

L'opérateur place alors l'arbre de transmission sur le banc d'équilibrage en fixant ses extrémités libres respectivement aux premier et deuxième outillages de fixation, à l'aide de boulons par exemple.

Lorsque l'arbre de transmission est en position, ces première et deuxième outillages de fixation sont alors entraînés en rotation à la vitesse requise.

Un moyen d'équilibrage traditionnel, mettant en oeuvre les principes mathématiques relatifs au diagramme de Fresnel à l'aide de capteurs piézo-électriques par exemple, indique alors à l'opérateur s'il est nécessaire d'équilibrer l'arbre de transmission en précisant de plus les modifications à apporter.

Dans l'affirmative, l'opérateur va généralement retoucher une partie de l'arbre de transmission prévue à cet effet, pour enlever ou ajouter de la matière et permettre le positionnement du centre de gravité de l'arbre de transmission sur l'axe de rotation de cet arbre de transmission.

Toutefois, pour que l'équilibrage soit efficace et parfaitement reproductible, il est impératif que l'arbre de transmission soit parfaitement positionné sur le banc d'équilibrage.

On comprend que dans le cas contraire, le résultat obtenu ne serait pas optimal. Si l'arbre de transmission ne se trouve pas dans une position strictement identique à la position future de cet arbre de transmission, sur un giravion par exemple, alors, une fois installé à bord du giravion, cet arbre de transmission ne sera finalement pas équilibré.

En effet, le banc d'équilibrage permet d'équilibrer un arbre de transmission disposé dans une position donnée, le moyen d'équilibrage ne recadrant pas ses données en fonction de cette position. Une erreur de positionnement a donc des conséquences catastrophiques, l'arbre de transmission ne pouvant pas être correctement équilibré.

Or, pour ne pas générer de vibrations sur un giravion, l'équilibrage se doit d'être extrêmement précis, le centre de gravité de l'arbre de transmission se déplaçant seulement d'une distance de l'ordre de 0.015 millimètre, au maximum, durant la procédure d'équilibrage.

Par suite, il est impossible d'obtenir une précision suffisante avec le dispositif de l'art antérieur muni d'outillages de fixation liés par des boulons à un arbre de transmission.

En outre, même si un positionnement correct de l'arbre de transmission était envisageable, il se ferait obligatoirement au détriment du temps passé par l'opérateur pour cette opération, l'opérateur devant positionner manuellement l'arbre de transmission avec le plus grand soin. La rentabilité d'un tel dispositif en serait ainsi fortement diminuée dans la mesure où l'équilibrage d'un unique arbre de transmission serait particulièrement long à mettre en oeuvre.

De plus, il est aussi impératif que le banc d'équilibrage en tant que tel soit lui-même équilibré, ou du moins ces outillages de fixation. Les outillages de fixation étant fixés à l'arbre de transmission, le banc d'équilibrage va alors finalement équilibrer l'ensemble outillages de fixation / arbre de transmission.

Par conséquent, si les outillages de fixation ne sont pas correctement équilibrés au départ, il en ira de même pour l'arbre de transmission, le défaut d'équilibrage des outillages de fixation se répercutant naturellement sur l'arbre de transmission.

Le centre de gravité de chaque outillage de fixation doit alors se trouver sur leur axe de rotation, les première et deuxième outillages de fixation devant avoir le même axe de rotation.

En résumé, l'équilibrage ne peut être correctement réalisé que si d'une part, les première et deuxième outillages de fixation sont parfaitement équilibrés et possèdent un axe de rotation commun avant l'installation de l'arbre de transmission sur le banc d'équilibrage, et, d'autre part, si cet arbre de transmission est fixé sur les premier et deuxième outillages de fixation dans une position identique à celle qu'il aura dans le giravion.

On connaît un deuxième banc d'équilibrage utilisant des outillages de fixation, agencés à l'intérieur des extrémités libres de l'arbre de transmission, et des paliers fluides.

Les outillages de fixation ont alors un diamètre extérieur inférieur au diamètre intérieur de l'arbre de transmission afin de pouvoir être disposés dans cet arbre de transmission. La différence entre ces diamètres est alors faible, de l'ordre de 0.015 millimètre.

Usuellement, le palier fluide consiste à former un film fluide, de l'huile ou de l'air, dans l'espace séparant le diamètre extérieur des outillages de fixation du diamètre intérieur de l'arbre de transmission. Le fluide permet donc de centrer chaque outillage de fixation à l'intérieur de l'arbre de transmission. Cet arbre de transmission est ainsi correctement et précisément positionné.

De plus, les frottements entre l'arbre de transmission et les outillages de fixation étant nuls, il est aisé de mettre en rotation l'arbre de transmission à l'aide de jets d'air propulsés sur la surface extérieure de l'arbre de transmission, deux jets diamétralement opposés par exemple.

Généralement, ce dispositif est très efficace. Néanmoins, lorsque le rapport portée/diamètre de l'extrémité libre de l'arbre de transmission devant accueillir l'outillage de fixation est faible, la portée correspondant à la longueur de l'extrémité libre pouvant être portée par l'outillage de fixation, on observe des blocages du dispositif.

Par exemple, quand ledit rapport est inférieur à 5 %, le palier fluide ne permet pas de centrer correctement l'arbre de transmission. A haut régime, l'arbre de transmission se met alors souvent en travers en raison de la rupture du film fluide et se bloque, ce qui empêche la réalisation de l'équilibrage.

En outre, l'agencement de l'arbre de transmission sur le banc d'équilibrage est délicat, le palier fluide devant être étanche par exemple. Par suite, il s'avère long, et donc coûteux en terme de main d'oeuvre, et même relativement fragile.

Des outillages de fixation d'arbres de transmission sont décrits dans les documents US 2003/0022720 et GB 2536030. D'autres systèmes d'arbres rotatifs sont décrits dans les documents US 5022276 et US 2005/0005686.

La présente invention a pour objet de proposer un outillage de fixation actif, efficace quelles que soient les conditions, permettant de s'affranchir des limitations des dispositifs connus. L'outillage de fixation doit ainsi permettre une installation rapide et précise de l'arbre de transmission sur le banc d'équilibrage.

Selon l'invention, un outillage de fixation d'un arbre de transmission est agencé à une extrémité libre de cet arbre de transmission. L'invention est remarquable en ce que l'outillage de fixation est muni d'un moyen de centrage de l'arbre de transmission qui est déformable par des efforts centrifuges afin d'entrer en contact avec ledit arbre de transmission à compter d'une vitesse de rotation déterminée, éventuellement comprise entre 2500 et 6000 tours par minute, de cet outillage de fixation autour de son axe de rotation.

Par conséquent, l'outillage de fixation, une jante par exemple, s'adapte automatiquement au diamètre de l'arbre de transmission par le biais de son moyen de centrage. En effet, lors de la rotation de l'outillage de fixation, les efforts centrifuges exercés sur cet outillage de fixation déforment son moyen de centrage qui positionne alors l'arbre de transmission de la manière requise.

L'outillage de fixation est donc robuste puisque uniquement mécanique et permet un montage aisé de l'arbre de transmission

De plus, la déformation du moyen de centrage est parfaitement reproductible puisqu'elle dépend uniquement de la vitesse de rotation de l'outillage de fixation.

Ce dernier répond donc bien aux problèmes soulevés précédemment. De même, on verra par la suite qu'il est aussi adaptable sur des arbres présentant des extrémités ayant un rapport portée/diamètre faible.

Avantageusement, l'outillage de fixation comporte un moyen d'entraînement en rotation de l'arbre de transmission. Ce moyen d'entraînement est muni d'au moins un doigt, de préférence deux doigts agencés symétriquement par rapport à l'axe de rotation de l'outillage, qui coopère avec un alésage ménagé dans l'arbre de transmission afin d'entraîner en rotation cet arbre de transmission autour dudit axe de rotation de l'outillage de fixation.

Par ailleurs, un générateur de mouvement permet la mise en rotation de l'outillage de fixation et donc son moyen d'entraînement et son moyen de centrage.

A faible vitesse, le moyen d'entraînement répercute son mouvement rotatif à l'arbre de transmission sans aucune aide. Toutefois, à haut régime, les efforts centrifuges déforment suffisamment le moyen de centrage qui entre alors en contact avec l'arbre de transmission pour le positionner. A compter de cet instant, le moyen centrage entraîne à son tour l'arbre de transmission par friction, le moyen d'entraînement participant toujours à cette mise en mouvement de l'arbre de transmission.

En outre, l'alésage a une dimension supérieure à celle du doigt pour que l'arbre de transmission puisse se déplacer radialement par rapport à un rayon du doigt. Plus précisément, l'alésage et le doigt correspondant étant de forme cylindrique, l'alésage a un rayon supérieur à celui du doigt.

De cette façon, l'arbre de transmission peut se déplacer radialement par rapport au moyen d'entraînement, sous la pression du moyen de centrage, pour être correctement positionné.

En variante, il est possible de concevoir un moyen d'entraînement comportant un flasque cylindrique solidaire du moyen de centrage, ledit au moins un doigt étant ainsi fixé sur ce flasque.

Selon un premier et deuxième modes de réalisation, le moyen de centrage est agencé à l'intérieur de l'arbre de transmission.

Plus précisément, selon le premier mode de réalisation, le moyen de centrage comporte au moins deux fentes identiques partiellement traversantes qui débouchent chacune sur une face périphérique externe du moyen de centrage.

Chaque fente est alors borgne, un bout de la fente étant obturé alors que l'autre bout débouche sur l'extérieur du moyen de centrage au niveau de sa face périphérique externe.

Par suite, le moyen de centrage ayant un profil circulaire, chaque fente est finalement disposée selon une corde du profil.

Ces fentes, ou coupures, ménagées dans le moyen de centrage permettent à des arêtes de ce moyen de centrage de se déplacer sous l'effet de forces centrifuges.

Pour que le positionnement de l'arbre de transmission par rapport à l'outillage de fixation soit parfait et symétrique, les fentes sont réparties de manière équidistante sur la face périphérique externe du moyen de centrage.

Si deux fentes permettent d'obtenir des résultats satisfaisants, on note qu'il est néanmoins préférable d'utiliser au moins trois fentes pour garantir un centrage optimisé. De plus, la présence d'au moins trois fentes permet d'éviter la création d'un balourd inapproprié provoqué par un centrage approximatif.

Par ailleurs, le moyen de centrage comporte un nombre pair de fentes, ces fentes sont alors symétriques deux à deux par rapport au centre du profil.

Selon un deuxième mode de réalisation, le moyen de centrage est un cylindre creux partiellement découpé radialement, c'est-à-dire selon des rayons du cylindre, pour présenter une pluralité de masselottes identiques et déplaçables chacune sous l'effet d'efforts centrifuges.

Le cylindre comporte alors avantageusement des rainures radiales qui débouchent sur une unique face extérieure du moyen de centrage.

Par ailleurs, le moyen de centrage étant muni d'une zone interne qui a un premier diamètre interne et qui est solidarisée à un moyen d'entraînement, le moyen de centrage étant pourvu d'une zone externe qui a un deuxième diamètre interne et qui est solidarisée à la zone interne, le deuxième diamètre est inférieur au premier diamètre.

Par suite, la partie libre du moyen de centrage, à savoir la deuxième zone, a donc une masse supérieure à sa partie fixe, la première zone, ce qui maximise l'effet de la force centrifuge.

Du fait de ses caractéristiques, l'outillage de fixation selon le premier mode de réalisation est plus adapté aux extrémités libres d'arbres de transmission ayant un rapport portée/diamètre faible, à savoir inférieur à 5%.

Selon un troisième mode de réalisation, le moyen de centrage est agencé à l'extérieur de l'arbre de transmission.

Ainsi, le moyen de centrage est avantageusement un anneau d'une épaisseur constante qui comporte au moins deux lames flexibles, de préférence au moins trois lames flexibles, réparties de manière équidistante les unes des autres sur la périphérie externe de l'anneau.

Sous l'effet de la force centrifuge, les lames flexibles se déforment et agissent sur l'arbre de transmission.

Par ailleurs, le moyen de centrage comporte une première et une deuxième lumières en forme de U pour délimiter chaque lame flexible, la concavité des première et une deuxième lumières en forme de U étant en regard l'une de l'autre. La lame flexible provient donc d'un usinage, électrochimique par exemple, de l'anneau.

En réalisant des lumières dans cet anneau, on crée effectivement les lames flexibles du moyen de centrage

En outre, la première lumière est plus longue que la deuxième lumière. Une première partie de la lame flexible, comprise dans la première lumière, se déplace alors sous l'effet de la force centrifuge et entraîne la deuxième partie de la lame flexible, comprise dans la deuxième lumière. La deuxième partie de chaque lame flexible agit alors sur l'arbre de transmission pour le positionner de la manière requise.

Enfin, on comprend qu'en fonction de la géométrie de l'arbre de transmission, un opérateur peut utiliser d'une part un outillage de fixation selon un mode particulier de réalisation pour fixer une première extrémité libre de l'arbre de transmission et, d'autre part, un outillage de fixation selon un autre mode de réalisation pour fixer une deuxième extrémité libre de l'arbre de transmission.

La présente invention a aussi pour objet un banc d'équilibrage mettant en oeuvre l'outillage de fixation selon l'invention décrit précédemment.

Par suite, un banc d'équilibrage d'un arbre de transmission muni d'une première et d'une deuxième extrémités libres, comporte un moyen d'équilibrage pour indiquer à un opérateur si cet arbre de transmission est bien équilibré et permettre l'équilibrage si nécessaire.

De plus, le banc d'équilibrage comporte deux outillages de fixation selon l'invention entraînés via un générateur de mouvement pour mettre en rotation l'arbre de transmission, chaque outillage de fixation étant agencé à une extrémité libre de l'arbre de transmission.

L'invention et ses avantages apparaîtront avec plus de détails dans le cadre de la description qui suit avec des exemples de réalisation donnés à titre illustratif en référence aux figures annexées qui représentent :
- la figure 1, une coupe schématique d'un banc d'équilibrage,
- la figure 2, une vue isométrique schématique d'un outillage de fixation selon un premier mode de réalisation,
- la figure 3, une vue isométrique schématique d'un outillage de fixation selon un deuxième mode de réalisation,
- la figure 4, une coupe schématique d'un outillage de fixation selon le deuxième mode de réalisation, et
- la figure 5, une vue isométrique schématique d'un outillage de fixation selon un troisième mode de réalisation.

Les éléments présents dans plusieurs figures distinctes sont affectés d'une seule et même référence.

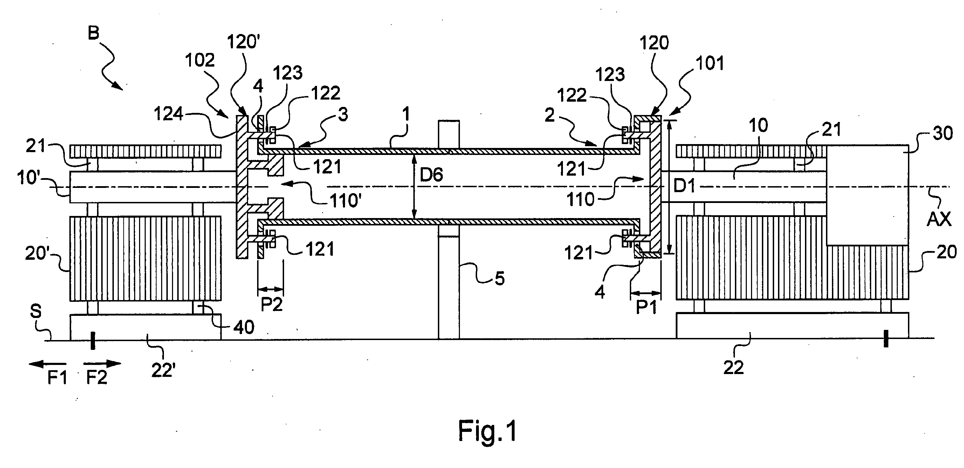

La figure 1 présente un banc d'équilibrage B, selon l'invention, d'un arbre de transmission 1 muni d'une première et d'une deuxième extrémités libres 2, 3.

Ce banc d'équilibrage comporte un premier et un deuxième outillages de fixation 101, 102 pour fixer l'arbre de transmission 1 à équilibrer sur le banc d'équilibrage B.

Les premier et deuxième outillages de fixation 101, 102 sont respectivement solidarisés à un premier et un deuxième arbres entraînement 10, 10' du banc d'équilibrage B agencés dans un premier et deuxième châssis 20, 20' de ce banc d'équilibrage.

Afin de pouvoir effectuer des mouvements rotatifs autour de son axe de rotation AX, cet axe étant par ailleurs aussi l'axe de rotation des premier et deuxième outillages de fixation 101, 102, le banc d'équilibrage B est muni de roulements à billes 21 disposés entre chaque châssis 20, 20' et son arbre d'entraînement 10, 10'.

En outre, le banc d'équilibrage B comporte un premier et deuxième socles mobiles 22, 22' respectivement des premier et deuxième châssis 20, 20'. Ces socles mobiles 20, 20' sont déplaçables longitudinalement, c'est-à-dire selon l'axe de rotation AX des premier et deuxième outillages de fixation 101, 102 et des premier et deuxième arbres d'entraînement 10, 10', afin d'autoriser la fixation de l'arbre de transmission 1 sur les outillages de fixation 101, 102.

De plus, le banc d'équilibrage B est pourvu de capteurs piézo-électriques 40 disposés entre le premier châssis 20 et le premier socle 22 ainsi qu'entre le deuxième châssis 20' et le deuxième socle 22'.

Ces capteurs 40 sont alors reliés à un moyen d'équilibrage classique non représenté mettant en oeuvre la théorie du diagramme de Fresnel pour déterminer si l'arbre de transmission est équilibré.

Pour réaliser l'équilibrage de l'arbre de transmission 1, durant une phase préliminaire, un opérateur déplace longitudinalement, selon la flèche F1, un ensemble deuxième socle 22'/ deuxième châssis 20'/ deuxième arbre d'entraînement 10'/ deuxième outillage de fixation 102 pour fixer un arbre de transmission 1 équilibré au premier outillage de fixation 101.

Ce premier outillage de fixation 101 est conçu selon un premier mode de réalisation particulièrement bien adapté aux extrémités libres d'arbres de transmission ayant un faible rapport portée/ diamètre, à savoir inférieur à 5%. Ce rapport est notamment faible pour la première extrémité libre 2 de l'arbre de transmission 1, la portée P1 apte être en contact avec le moyen de centrage 110 du premier outillage de fixation 101 étant réduite alors que son diamètre D1 est relativement important.

Par suite, le premier outillage de fixation 101 est agencé à l'intérieur de l'arbre de transmission 1 en lui étant fixé à l'aide d'un moyen de centrage 110 et d'un moyen d'entraînement 120.

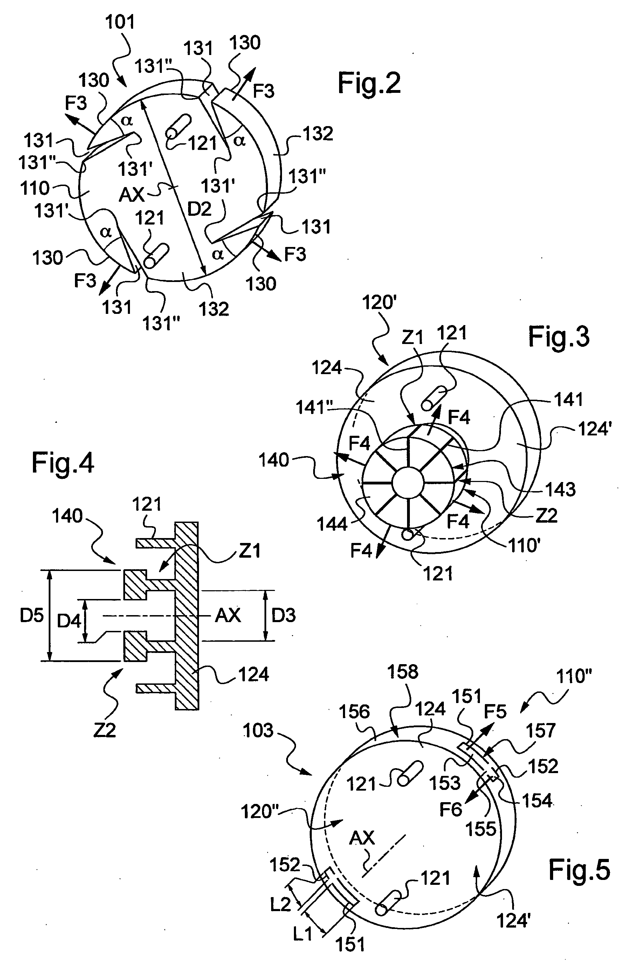

En référence à la figure 2, le premier outillage de fixation 101 est une jante déformable par des efforts centrifuges.

Plus précisément, le moyen de centrage 110 du premier outillage de fixation 101 selon un premier mode de réalisation est un disque qui comporte une pluralité de fentes 131 identiques les unes aux autres, quatre sur l'exemple représenté, chaque fente 131 traversant partiellement le moyen de centrage 110.

Ainsi, chaque fente 131 est borgne, un bout 131' de chaque fente 131 étant fermé alors que l'autre bout 131" débouche sur l'extérieur du moyen de centrage, à savoir sur la face périphérique externe 132 de ce moyen de centrage 110.

De plus, le moyen de centrage 110 étant un disque, ce moyen de centrage 110 a un profil circulaire. Chaque fente 131 est alors disposée sur une corde de ce profil circulaire. Ainsi, un même angle aigu *α* sépare chaque fente 131 de la face périphérique externe du moyen de centrage 110.

Par ailleurs, pour pouvoir être agencé à l'intérieur de l'arbre de transmission 1, le moyen de centrage a un diamètre externe D2 inférieur au diamètre interne D1 de l'extrémité libre 2 de l'arbre de transmission 1 dans lequel il doit être agencé.

En outre, le premier outillage de fixation 101 est muni d'un moyen d'entraînement 120 qui coopère avec des alésages 4 de l'arbre de transmission 1. Ces alésages 4 sont d'ores et déjà ménagés dans l'arbre de transmission et servent à connecter cet arbre de transmission 1 à un autre organe mécanique, le turbomoteur d'un giravion par exemple.

Le moyen d'entraînement possède alors au moins un doigt 121 solidarisé au moyen de centrage 110, avantageusement deux doigts 121 agencés symétriquement sur le moyen de centrage 110 par rapport à l'axe de rotation AX.

Lorsque le premier outillage de fixation 101, une jante, doit être fixé à l'arbre de transmission 1, les doigts 121 du moyen d'entraînement traversent les alésages 4 de l'arbre de transmission 1, le moyen de centrage étant disposé à l'intérieur de cet arbre de transmission 1.

L'opérateur utilise alors des rondelles 123 et des boulons 122 sur chaque doigt 121 pour que la face avant 133 du moyen de centrage plaque contre l'arbre de transmission, les rondelles 123 étant du type élastique pour assurer un maintien suffisant.

Avantageusement, chaque alésage 4 a une dimension supérieure, en l'occurrence son diamètre, à celle du doigt 121 qu'il accueille. Par suite, l'arbre de transmission 1 peut se déplacer radialement par rapport à chaque doigt 121, c'est-à-dire dans le plan X, Y. Cette caractéristique permet de réaliser un positionnement précis de l'arbre de transmission.

Dans ces conditions, lorsque le premier outillage de fixation 101 est mis en rotation autour de l'axe de rotation AX, le moyen d'entraînement du premier outillage de fixation entraîne l'arbre de transmission dans son mouvement rotatif.

A partir d'une vitesse de rotation déterminée, comprise par exemple entre 2500 et 6000 tours par minute, le moyen de centrage sera nettement déformé par les efforts centrifuges qu'il subit. Les arêtes 130, du moyen de centrage, qui surplombent les fentes 131 s'ouvrent donc sous l'effet de ces efforts centrifuges, selon les flèches F3, et viennent en contact avec l'arbre de transmission 1.

Les fentes 131 étant réparties de manière équidistante sur la face périphérique externe 132 et étant identiques, les fentes 131 étant de plus symétriques deux à deux lorsque le moyen de centrage 110 en comporte un nombre pair, les arêtes 130 poussent la première extrémité libre 2 de l'arbre de transmission qui se déplace alors de manière à ce que le moyen de centrage 110 soit centré à l'intérieur de cet arbre de transmission. En effet, les arêtes ont une masse identique et se déplacent donc de façon identique sous l'effet de la force centrifuge.

On comprend que le déplacement de l'arbre de transmission est notamment autorisé par les doigts 121 du moyen d'entraînement de part le jeu existant entre chaque alésage 4 et chaque doigt 121. De plus, le serrage des boulons 122 est précisément dosé, notamment à l'aide des rondelles 123, pour permettre un tel déplacement.

Dans ces conditions, le positionnement de l'arbre de transmission 1 préalablement à son équilibrage est très aisé puisque réalisé automatiquement par le moyen de centrage déformable. Ce positionnement est de plus reproductible puisque la déformation du moyen de centrage dépend uniquement de la vitesse de rotation du premier outillage de fixation, cette vitesse de rotation étant facilement contrôlée.

On note que la fixation de l'arbre de transmission 1 au premier outillage 101 peut être facilitée pour l'opérateur en équipant le banc d'équilibrage d'au moins un moyen de soutien 5. L'opérateur pose alors l'arbre de transmission 1 sur ce moyen de soutien 5 et procède à la fixation au premier outillage de fixation 101 sans avoir à porter l'arbre de transmission 1. De plus, le moyen de soutien 5 positionne l'arbre de transmission 1 avec une certaine précision et participe donc activement à la fixation de cet arbre de transmission 1.

On note que le moyen de soutien 5 sert de plus de sécurité en cas de rupture d'un élément, plus précisément d'un outillage de fixation par exemple.

Lorsque le premier outillage de fixation 101 est fixé à l'arbre de transmission 1, l'opérateur déplace alors l'ensemble deuxième socle 22'/ deuxième châssis 20'/ deuxième arbre d'entraînement 10'/ deuxième outillage de fixation 102 selon la flèche F2, pour fixer l'arbre de transmission 1 équilibré au deuxième outillage de fixation 102.

Ce deuxième outillage de fixation 102 est conçu selon un deuxième mode de réalisation particulièrement bien adapté pour les extrémités libres d'arbres de transmission ayant un rapport portée/ diamètre supérieur à 5%.

Par suite, le deuxième outillage de fixation 102 est agencé à l'intérieur de la deuxième extrémité libre 3 de l'arbre de transmission 1 en lui étant fixé à l'aide d'un moyen de centrage 110' et d'un moyen d'entraînement 120'.

En référence aux figures 3 et 4, le deuxième outillage de fixation 102 est une jante déformable par des efforts centrifuges.

Plus précisément, le moyen de centrage 110' du deuxième outillage de fixation 102 selon un deuxième mode de réalisation est un cylindre creux 140 découpé radialement, à savoir selon son propre rayon, de manière partielle pour présenter une pluralité de masselottes 143.

Ainsi, ce cylindre creux 140 comporte une pluralité de rainures radiales, identiques les unes aux autres et borgnes, un bout 141' de chaque rainure radiale 141 étant fermé dans une zone interne Z1 du moyen de centrage 110' alors que l'autre bout 141" débouche sur l'extérieur du moyen de centrage 110', à savoir sur la face extérieure 144 de ce moyen de centrage 110', dans une zone externe Z2 de ce moyen de centrage 110'.

De plus, la zone interne Z1 a un premier diamètre interne supérieur au deuxième diamètre interne D4 de la zone externe Z2. Cette zone externe Z2 a donc une masse supérieure à celle de la zone interne Z1

Par ailleurs, pour pouvoir être agencé à l'intérieur de l'arbre de transmission 1, le moyen de centrage 110' a un diamètre externe D5 inférieur au diamètre interne D6 de la deuxième extrémité libre 3 de l'arbre de transmission 1 dans lequel il doit être agencé.

En outre, le deuxième outillage de fixation 102 est muni d'un moyen d'entraînement 120' qui coopère avec des alésages 4 de l'arbre de transmission 1.

Le moyen d'entraînement possède alors au moins un doigt 121 solidarisé à un flasque cylindrique 124 solidaire de la zone interne Z1 du moyen de centrage 110', avantageusement deux doigts 121 agencés symétriquement sur le flasque 124 par rapport à l'axe de rotation AX.

Lorsque le deuxième ouillage de fixation 102, une jante, doit être fixé à l'arbre de transmission 1, les doigts 121 du moyen d'entraînement 120' traversent les alésages 4 de l'arbre de transmission 1, le moyen de centrage 110' étant disposé à l'intérieur de cet arbre de transmission 1.

L'opérateur utilise alors des rondelles 123, du type élastique, et des boulons 122 sur chaque doigt 121 pour qu'une surface 124' du flasque 124 plaque contre l'arbre de transmission 1.

Avantageusement, chaque alésage 4 a une dimension supérieure, en l'occurrence son diamètre, à celle doigt 121 qu'il accueille. Par suite, l'arbre de transmission 1 peut se déplacer radialement par rapport à chaque doigt 121, c'est-à-dire dans le plan X, Y. Cette caractéristique permet de réaliser un positionnement précis de l'arbre de transmission.

Dans ces conditions, lorsque le deuxième outillage de fixation 102 sera mis en rotation autour de l'axe de rotation AX, le moyen d'entraînement du deuxième outillage de fixation entraîne l'arbre de transmission dans son mouvement rotatif.

A partir d'une vitesse de rotation déterminée, comprise entre 2500 et 6000 tours par minute par exemple, le moyen de centrage sera nettement déformé par les efforts centrifuges qu'il subit. Les masselottes 143 du moyen de centrage 110' s'ouvrent donc sous l'effet de ces efforts centrifuges, selon les flèches F4, et viennent en contact avec l'intérieur de la deuxième extrémité libre 3 de l'arbre de transmission 1.

Les rainures radiales 141 étant réparties de manière équidistante sur le cylindre creux 140 et étant identiques, les rainures 141 étant de plus symétriques deux à deux lorsque le moyen de centrage 110' en comporte un nombre pair, les masselottes 143 déplacent alors la première extrémité libre 2 de l'arbre de transmission de manière à ce que le moyen de centrage 110' soit centré à l'intérieur de la deuxième extrémité libre 3 de l'arbre de transmission. En effet, chaque masselotte 143 a une masse identique et se déplace donc de manière identique sous l'effet de la force centrifuge.

Dans ces conditions, le positionnement de l'arbre de transmission 1 préalablement à son équilibrage est très aisé puisque réalisé de façon automatique par le moyen de centrage 110' déformable. Ce positionnement est de plus reproductible puisque la déformation du moyen de centrage dépend uniquement de la vitesse de rotation du premier outillage de fixation, cette vitesse de rotation étant facilement contrôlée.

On constate que le montage et le positionnement de l'arbre de transmission 1 sur le banc d'équilibrage B est aisé, rapide et parfaitement contrôlé ce qui répond pleinement au besoin.

Lorsque l'arbre de transmission est installé, l'opérateur active un générateur de mouvement 30 qui met en rotation le premier arbre d'entraînement 10 et de fait le premier outillage de fixation 101.

Ce dernier entraîne à son tour en rotation, autour de l'axe de rotation AX, l'arbre de transmission 1 qui répercute ce mouvement sur le deuxième outillage de fixation 102 et le deuxième arbre d'entraînement 10'.

A partir d'une vitesse de rotation donnée, les moyens de centrage 110, 110' se déforment et positionnent alors parfaitement cet arbre de transmission 1 en le déplaçant radialement.

Les capteurs piézo-électriques 40 entrent alors en action et transmettent des signaux au moyen d'équilibrage du banc d'équilibrage B.

Durant cette phase préliminaire, l'opérateur utilisant un arbre de transmission 1 témoin, si le moyen d'équilibrage constate un défaut d'équilibrage, par des méthodes classiques et connues, le défaut relatif aux outillages de fixations 101, 102 en tant que tels sera alors identifié.

L'opérateur place alors des masses sur ces outillages de fixation afin de les équilibrer, et indexe la position d'un outillage de fixation par rapport à l'autre.

A l'issue de cette phase préliminaire, les premier et deuxième outillages de fixation sont donc équilibrés.

Désormais, préalablement à chaque équilibrage d'un nouvel arbre de transmission 1, l'opérateur se contentera d'indexer la position des outillages de fixation de la manière requise, mesurée lors de la phase préliminaire.

Ensuite, il installera l'arbre de transmission à équilibrer sur le banc, en suivant la procédure précédemment décrite. Une fois la vitesse de rotation nominale atteinte, à laquelle l'équilibrage doit être réalisé, le moyen d'équilibrage déterminera si l'opérateur doit retoucher ou non l'arbre de transmission pour l'équilibrer. En effet, les outillages de fixation étant équilibrés, un défaut d'équilibrage mesuré par le moyen d'équilibrage implique nécessairement un défaut d'équilibrage de l'arbre de transmission en tant que tel.

La figure 5 présente une vue isométrique schématique d'un outillage de fixation 103 selon un troisième mode de réalisation, cet outillage de fixation 103 pouvant être agencé à l'extérieur de l'arbre de fixation 1, contrairement aux premier et deuxième modes de réalisation précédemment décrits.

L'outillage de fixation 103 comporte un moyen de centrage 110" muni d'un anneau 156. Cet anneau 156 entoure alors l'extrémité libre de l'arbre de transmission un fois installé.

De plus, le moyen de centrage 110" est pourvu d'au moins deux lames flexibles 157 réparties de manière équidistante sur la périphérie externe de l'anneau 156.

En effet, l'anneau 156 est usiné afin de présenter une première et une deuxième lumières 151 en forme de U, la concavité des ces première et deuxième lumières étant en regard l'une de l'autre. Une première et une deuxième lumières 151, 152 entourent donc chaque lame flexible 157, la première lumière 151 représentant le pourtour d'une première partie 153 de la lame flexible 157 alors que la deuxième lumière 152 représente le pourtour d'une deuxième partie 154 de cette lame flexible 157.

Les première et deuxième parties 153, 154 sont alors reliées par une portion 155 de l'anneau, séparant les première et deuxième lumière 151, 152. Cette portion 155 constitue une sorte de pivot autour duquel la lame flexible peut tourner.

Par ailleurs, la première longueur L1 de la première partie 153 de la lame flexible 157 est supérieure à la deuxième longueur L2 de la deuxième partie 154 de cette lame flexible 157. Ainsi, la première partie 153 a une masse supérieure à la masse de la deuxième partie 154 de la lame flexible 157.

En outre, le troisième outillage de fixation 103 est muni d'un moyen d'entraînement 120" qui coopère avec les alésages de l'arbre de transmission.

Ce moyen d'entraînement est identique à celui du deuxième mode de réalisation. Il comprend alors au moins un doigt 121 solidarisé à un flasque cylindrique 124 solidaire de l'anneau 156, avantageusement deux doigts 121 agencés symétriquement sur le flasque 124 par rapport à l'axe de rotation AX.

Lorsque le troisième outillage de fixation 103, une jante, doit être fixé à l'arbre de transmission 1, les doigts 121 du moyen d'entraînement 120" traversent les alésages 4 de l'arbre de transmission 1, le moyen de centrage étant disposé à l'intérieur de cet arbre de transmission 1.

L'opérateur utilise alors des rondelles 123, du type élastique, et des boulons 122 sur chaque doigt 121 pour qu'une surface 124' du flasque 124 plaque contre l'arbre de transmission 1.

Avantageusement chaque alésage 4 a une dimension supérieure, en l'occurrence son diamètre, à celle doigt 121 qu'il accueille. Par suite, l'arbre de transmission 1 peut se déplacer radialement par rapport à chaque doigt 121, c'est-à-dire dans le plan X, Y. Cette caractéristique permet de réaliser un positionnement précis de l'arbre de transmission.

Par ailleurs , lorsque le troisième outillage de fixation 103 est mis en rotation autour de l'axe de rotation AX, à partir d'une vitesse de rotation déterminée, comprise par exemple entre 2500 et 6000 tours par minutes, le moyen de centrage 110" se déforme substantiellement. Sous l'effet des efforts centrifuges, chaque lame flexible se déplace.

En effet, la première partie 153 de chaque lame flexible 157 étant plus lourde que sa deuxième partie 154, cette première partie 153 s'éloigne de l'anneau suivant la flèche F5.

La lame flexible tourne alors autour du pivot matérialisé par la portion 155 de l'anneau 156. Par conséquent, la deuxième partie 154 de la lame flexible se rapproche de l'arbre de transmission selon la flèche F6.

Les diverses deuxième parties 154 des lames flexibles 157 appuient alors sur l'arbre de transmission qui finit par être centré à l'intérieur de l'anneau 156 du moyen de centrage 110".

Enfin, on note que, quel que soit le mode de réalisation choisi, le moyen de centrage de l'outillage de fixation peut être conçu à l'aide d'un usinage électrochimique. Il devient alors possible de réaliser les fentes 131, les rainures 141 ainsi que les première et deuxième lumières 151, 152 respectivement des premier, deuxième et troisième modes de réalisation à moindre coût et en un temps réduit.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, le banc d'équilibrage présenté par la figure 1 comporte un premier et un deuxième socles mobiles 22, 22'. Néanmoins, il est possible de prévoir que le premier socle 22 soit fixe, le deuxième socle 22' demeurant mobile axialement Ainsi, il ne serait pas utile de déplacer le socle équipé du générateur de mouvement 30 ce qui facilite l'opération.

## Revendications

1. Outillage de fixation (101, 102, 103) d'un arbre de transmission (1) agencé à une extrémité libre (2, 3) dudit arbre de transmission (1), ledit outillage de fixation (101, 102, 103) comprenant un moyen de centrage (110, 110', 110") de l'arbre de transmission (1) et d'un moyen d'entraînement (120, 120', 120") en rotation dudit arbre de transmission (1),
**caractérisé en ce que** ledit moyen de centrage (110, 110', 110") est déformable par des efforts centrifuges afin d'entrer en contact avec ledit arbre de transmission à compter d'une vitesse de rotation déterminée dudit outillage de fixation (101, 102, 103) autour de son axe de rotation (AX).

2. Outillage de fixation selon la revendication 1,
**caractérisé en ce que** ladite vitesse de rotation déterminée est comprise entre 2500 et 6000 tours par minute.

3. Outillage de fixation selon l'une quelconque des revendications précédentes,
**caractérisé en ce que** ledit outillage de fixation (101, 102, 103) est une jante.

4. Outillage de fixation selon l'une quelconque des revendications précédentes,
**caractérisé en ce que** ledit moyen d'entraînement (120, 120', 120") est muni d'au moins un doigt (121) qui coopère avec un alésage (4) ménagé dans ledit arbre de transmission (1) afin d'entraîner en rotation cet arbre de transmission (1) autour dudit axe de rotation (AX).

5. Outillage de fixation selon la revendication 4,
**caractérisé en ce que** ledit alésage (4) a une dimension supérieure à celle du doigt (121) pour que ledit arbre de transmission (1) puisse se déplacer radialement par rapport à un rayon dudit doigt (121).

6. Outillage de fixation selon l'une quelconque des revendications 4 à 5,
**caractérisé en ce que** ledit moyen d'entraînement (120, 120', 120") comporte deux doigts (121) agencés symétriquement par rapport au dit axe de rotation (AX).

7. Outillage de fixation selon l'une quelconque des revendications 4 à 6,
**caractérisé en ce que** ledit moyen d'entraînement (120', 120") comporte un flasque (124) cylindrique solidaire dudit moyen de centrage (110', 110"), ledit au moins un doigt (121) étant fixé sur ledit flasque (124).

8. Outillage de fixation selon l'une quelconque des revendications précédentes,
**caractérisé en ce que** ledit moyen de centrage (110, 110') est agencé à l'intérieur de l'arbre de transmission (1).

9. Outillage de fixation selon la revendication 8,
**caractérisé en ce que** ledit moyen de centrage (110) comporte au moins deux fentes (131) partiellement traversantes qui débouchent chacune sur une face périphérique externe (132) dudit moyen de centrage (110).

10. Outillage de fixation selon la revendication 9,
**caractérisé en ce que** ledit moyen de centrage (110) ayant un profil circulaire, chaque fente (131) est disposée selon une corde dudit profil.

11. Outillage de fixation selon l'une quelconque des revendications 9 à 10,
**caractérisé en ce que** lesdites fentes (131) sont symétriques deux à deux par rapport au centre (C) dudit profil.

12. Outillage de fixation selon l'une quelconque des revendications 9 à 11,
**caractérisé en ce que** lesdites fentes (131) sont réparties de manière équidistante sur ladite face périphérique externe (132) dudit moyen de centrage (110).

13. Outillage de fixation selon la revendication 8,
**caractérisé en ce que** ledit moyen de centrage (110') est un cylindre (140) creux partiellement découpé radialement pour présenter une pluralité de masselottes (143).

14. Outillage de fixation selon la revendication 13,
**caractérisé en ce que** ledit cylindre (140) comporte des rainures radiales (141) qui débouchent sur une unique face extérieure (144) dudit moyen de centrage (110').

15. Outillage de fixation selon l'une quelconque des revendications 13 à 14,
**caractérisé en ce que**, ledit moyen de centrage (110') étant muni d'une zone interne (Z1) qui a un premier diamètre interne (D3) et qui est solidarisée à un moyen d'entraînement (120'), ledit moyen de centrage (110') étant pourvu d'une zone externe (Z2) qui a un deuxième diamètre interne (D4) et qui est solidarisée à ladite zone interne (Z1), ledit deuxième diamètre (D4) est inférieur au dit premier diamètre (D1).

16. Outillage de fixation selon l'une quelconque des revendications 1 à 7,
**caractérisé en ce que** ledit moyen de centrage (110") est agencé à l'extérieur dudit arbre de transmission (1).

17. Outillage de fixation selon la revendication 16,
**caractérisé en ce que** ledit moyen de centrage (110") est un anneau (156) d'une épaisseur constante qui comporte au moins deux lames flexibles (157) réparties de manière équidistante les unes des autres sur la périphérie externe de l'anneau (156).

18. Outillage de fixation selon la revendication 17,
**caractérisé en ce que** ledit moyen de centrage (110") comporte une première et une deuxième lumières (153, 154) en forme de U pour délimiter chaque lame flexible (157), la concavité des première et une deuxième lumières (153, 154) en forme de U étant en regard l'une de l'autre.

19. Outillage de fixation selon la revendication 18,
**caractérisé en ce que** la première lumière (153) est plus longue que ladite deuxième lumière (154).

20. Banc d'équilibrage (B) d'un arbre de transmission (1) muni d'une première et d'une deuxième extrémités libres (2, 3), ledit banc d'équilibrage (B) comportant un moyen d'équilibrage pour indiquer à un opérateur si ledit arbre de transmission (1) est bien équilibré,
**caractérisé en ce que** ledit banc d'équilibrage (B) comporte deux outillages de fixation (101, 102, 103) selon l'une quelconque des revendications 1 à 19 entraînés via un générateur de mouvement (30) pour mettre en rotation ledit arbre de transmission (1), chaque outillage de fixation (101, 102, 103) étant agencé une extrémité libre (2, 3) dudit arbre de transmission (1).

## Patentansprüche

1. Befestigungswerkzeug (101, 102, 103) einer Getriebewelle (1), das an einem freien Ende (2, 3) der Getriebewelle (1) angeordnet ist, wobei das Befestigungswerkzeug (101, 102, 103) ein Zentriermittel (110, 110', 110") für die Getriebewelle (1) und ein Antriebsmittel (120, 120', 120") für den Drehantrieb der Getriebewelle (1) aufweist, **dadurch gekennzeichnet, dass** das Zentriermittel (110, 110', 110") durch Zentrifugalkräfte verformbar ist, um mit der Getriebewelle ausgehend von einer vorbestimmten Drehgeschwindigkeit des Befestigungswerkzeugs (101, 102, 103) um seine Drehachse (AX) in Kontakt zu treten.

2. Befestigungswerkzeug nach Anspruch 1,
**dadurch gekennzeichnet, dass** die vorbestimmte Drehgeschwindigkeit zwischen 2500 und 6000 Umdrehungen pro Minute liegt.

3. Befestigungswerkzeug nach einem der vorstehenden Ansprüche, **dadurch gekennzeichnet, dass** das Befestigungswerkzeug (101, 102, 103) ein Radkranz ist.

4. Befestigungswerkzeug nach einem der vorstehenden Ansprüche, **dadurch gekennzeichnet, dass** das Antriebsmittel (120, 120', 120") mit mindestens einem Stift (121) versehen ist, der mit einer Bohrung (4) zusammenwirkt, die in die Getriebewelle (1) eingearbeitet ist, um die Getriebewelle (1) um die Drehachse (AX) zu drehen.

5. Befestigungswerkzeug nach Anspruch 4,
**dadurch gekennzeichnet, dass** die Bohrung (4) eine Abmessung aufweist, die größer ist als die des Stiftes (121), damit die Getriebewelle (1) sich radial relativ zu einem Radius des Stiftes (121) bewegen kann.

6. Befestigungswerkzeug nach einem der Ansprüche 4 bis 5,
**dadurch gekennzeichnet, dass** das Antriebsmittel (120, 120', 120") zwei Stifte (121) aufweist, die symmetrisch relativ zu der Drehachse (AX) angeordnet sind.

7. Befestigungswerkzeug nach einem der Ansprüche 4 bis 6,
**dadurch gekennzeichnet, dass** das Antriebsmittel (120', 120") einen zylinderförmigen Flansch (124) aufweist, der mit dem Zentriermittel (110', 110") fest verbunden ist, wobei der mindestens eine Stift (121) auf dem Flansch (124) befestigt ist.

8. Befestigungswerkzeug nach einem der vorstehenden Ansprüche, **dadurch gekennzeichnet, dass** das Zentriermittel (110, 110') im Inneren der Getriebewelle (1) angeordnet ist.

9. Befestigungswerkzeug nach Anspruch 8,
**dadurch gekennzeichnet, dass** das Zentriermittel (110) mindestens zwei Schlitze (131) aufweist, die zum Teil durchgängig sind, die jeweils in eine äußeren Umfangsfläche (123) des Zentriermittels (110) münden.

10. Befestigungswerkzeug nach Anspruch 9,
**dadurch gekennzeichnet, dass** das Zentriermittel (110) ein kreisförmiges Profil aufweist, wobei jeder Schlitz (131) entlang einer Sehne des Profils angeordnet ist.

11. Befestigungswerkzeug nach einem der Ansprüche 9 bis 10,
**dadurch gekennzeichnet, dass** die Schlitze (131) jeweils paarweise relativ zu der Mitte (C) des Profils symmetrisch sind.

12. Befestigungswerkzeug nach einem der Ansprüche 9 bis 11,
**dadurch gekennzeichnet, dass** die Schlitze (131) gleich beabstandet auf der äußeren Umfangsfläche (132) des Zentriermittels (110) verteilt sind.

13. Befestigungswerkzeug nach Anspruch 8,
**dadurch gekennzeichnet, dass** das Befestigungsmittel (110') ein Hohlzylinder (140) ist, der radial teilweise ausgeschnitten ist, um eine Mehrzahl von Ausgleichsgewichten (143) zu bilden.

14. Befestigungswerkzeug nach Anspruch 13,
**dadurch gekennzeichnet, dass** der Zylinder (140) radiale Nuten (141) aufweist, die in einer einzigen Außenfläche (144) des Zentriermittels (110') münden.

15. Befestigungswerkzeug nach einem der Ansprüche 13 bis 14,
**dadurch gekennzeichnet, dass** das Zentriermittel (110') mit einem inneren Bereich (Z1) versehen ist, der einen ersten Innendurchmesser (D3) aufweist und der mit einem Antriebsmittel (120') fest verbunden ist, wobei das Zentriermittel (110') mit einem äußeren Bereich (Z2) versehen ist, der einen zweiten Innendurchmesser (D4) aufweist und der mit dem inneren Bereich (Z1) fest verbunden ist, wobei der zweite Durchmesser (D4) kleiner ist als der erste Durchmesser (D1).

16. Befestigungswerkzeug nach einem der Ansprüche 1 bis 7,
**dadurch gekennzeichnet, dass** das Zentriermittel (110") außen an der Getriebewelle (1) angeordnet ist.

17. Befestigungswerkzeug nach Anspruch 16,
**dadurch gekennzeichnet, dass** das Zentriermittel (110") ein Ring (156) mit einer konstanten Dicke ist, der mindestens zwei biegsame Streifen (157) aufweist, die zueinander gleich beabstandet auf der äußeren Umfangsfläche des Rings (156) angeordnet sind.

18. Befestigungswerkzeug nach Anspruch 17,
**dadurch gekennzeichnet, dass** das Zentriermittel (110") eine erste und eine zweite Öffnung (153, 154) in Form eines U's aufweist, um jeden der biegsamen Streifen (157) einzugrenzen, wobei die Höhlung der ersten und der zweiten Öffnung (153, 154) sich in Form eines U's gegenüberliegen.

19. Befestigungswerkzeug nach Anspruch 18,
**dadurch gekennzeichnet, dass** die erste Öffnung (153) länger ist als die zweite Öffnung (154).

20. Auswuchtblock (B) einer Getriebewelle (1), die ein erstes und ein zweites freies Ende (2, 3) aufweist, wobei der Auswuchtblock (B) ein Auswuchtmittel aufweist, um einer Bedienungsperson anzuzeigen, ob die Getriebewelle (1) gut ausgewuchtet ist,
**dadurch gekennzeichnet, dass** der Auswuchtblock (B) zwei Befestigungswerkzeug (101, 102, 103) nach einem der Ansprüche 1 bis 19 aufweist, die über einen Bewegungserzeuger (30) angetrieben werden, um die Getriebewelle (1) zu drehen, wobei jedes Befestigungswerkzeug (101, 102, 103) an einem freien Ende (2, 3) der Getriebewelle (1) angeordnet ist.

## Claims

1. Fastening tool (101, 102, 103) for fastening a transmission shaft (1) arranged at a free end (2, 3) of said transmission shaft (1), said fastening tool (101, 102, 103) comprising a centring means (110, 110', 110") for centring the transmission shaft (1) and a drive means (120, 120', 120") for driving said transmission shaft (1) in rotation,
**characterised in that** said centring means (110, 110', 110") is deformable by centrifugal forces so as to come into contact with said transmission shaft starting from a determined speed of rotation of said fastening tool (101, 102, 103) about its axis of rotation (AX).

2. Fastening tool according to claim 1,
**characterised in that** said determined speed of rotation is comprised between 2500 and 6000 revolutions per minute.

3. Fastening tool according to any one of the preceding claims,
**characterised in that** said fastening tool (101, 102, 103) is a rim.

4. Fastening tool according to any one of the preceding claims,
**characterised in that** said drive means (120, 120', 120") is provided with at least one finger (121) which cooperates with a bore (4) formed in said transmission shaft (1) in order to drive said transmission shaft (1) in rotation about said axis of rotation (AX).

5. Fastening tool according to claim 4,
**characterised in that** said bore (4) has a dimension greater than that of the finger (121) so that said transmission shaft (1) can move radially with respect to a radius of said finger (121).

6. Fastening tool according to any one of claims 4 to 5,
**characterised in that** said drive means (120, 120', 120") comprises two fingers (121) arranged symmetrically with respect to said axis of rotation (AX).

7. Fastening tool according to any one of claims 4 to 6,
**characterised in that** said drive means (120', 120") comprises a cylindrical end plate (124) secured to said centring means (110', 110"), said at least one finger (121) being fastened to said end plate (124).

8. Fastening tool according to any one of the preceding claims,
**characterised in that** said centring means (110, 110') is arranged inside the transmission shaft (1).

9. Fastening tool according to claim 8,
**characterised in that** said centring means (110) comprises at least two slots (131) partially passing through which each open onto an outer peripheral face (132) of said centring means (110).

10. Fastening tool according to claim 9,
**characterised in that** said centring means (110) having a circular profile, each slot (131) is disposed along a chord of said profile.

11. Fastening tool according to any one of claims 9 to 10,
**characterised in that** said slots (131) are symmetrical in pairs with respect to the centre (C) of said profile.

12. Fastening tool according to any one of claims 9 to 11,
**characterised in that** said slots (131) are equidistantly distributed on said outer peripheral face (132) of said centring means (110).

13. Fastening tool according to claim 8,
**characterised in that** said centring means (110') is a hollow cylinder (140) partially cut out radially so as to have a plurality of flyweights (143).

14. Fastening tool according to claim 13,
**characterised in that** said cylinder (140) comprises radial grooves (141) which open onto a single outer face (144) of said centring means (110').

15. Fastening tool according to any one of claims 13 to 14,
**characterised in that**, said centring means (110') being provided with an inner zone (Z1) which has a first inner diameter (D3) and which is secured to a drive means (120'), said centring means (110') being provided with an outer zone (Z2) which has a second inner diameter (D4) and which is secured to said inner zone (Z1), said second diameter (D4) is smaller than said first diameter (D1).

16. Fastening tool according to any one of claims 1 to 7,
**characterised in that** said centring means (110") is arranged outside said transmission shaft (1).

17. Fastening tool according to claim 16,
**characterised in that** said centring means (110") is a ring (156) of a constant thickness which comprises at least two flexible blades (157) distributed equidistantly from one other on the outer periphery of the ring (156).

18. Fastening tool according to claim 17,
**characterised in that** said centring means (110") comprises first and second U-shaped openings (153, 154) for delimiting each flexible blade (157), the concavity of the first and a second U-shaped openings (153, 154) facing one another.

19. Fastening tool according to claim 18,
**characterised in that** the first opening (153) is longer than said second opening (154).

20. Balancing bench (B) for balancing a transmission shaft (1) provided with a first and a second free end (2, 3), said balancing bench (B) comprising a balancing means for indicating to an operator whether said transmission shaft (1) is well balanced,
**characterised in that** said balancing bench (B) comprises two fastening tools (101, 102, 103) according to any one of claims 1 to 19 driven via a motion generator (30) to set said transmission shaft (1) into rotation, each fastening tool (101, 102, 103) being arranged at a free end (2, 3) of said transmission shaft (1).
